# EUROPEAN PATENT APPLICATION

(11) **EP 4 184 507 A1**
(43) Date of publication of application: **24.05.2023**
(21) Application number: 21208762.1
(22) Date of filing: 17.11.2021
(51) Int. Cl.: G10L 21/0208, H04S 7/00

(54) **HEADSET APPARATUS, TELECONFERENCE SYSTEM, USER DEVICE AND TELECONFERENCING METHOD**

(71) Applicant: Nokia Technologies Oy, 02610 Espoo (FI)
(72) Inventor: VILERMO, Miikka Tapani, 37200 Siuro (FI); TAMMI, Mikko Tapio, 33310 Tampere (FI); LEHTINIEMI, Arto Juhani, 33880 Lempäälä (FI)
(74) Representative: Nokia EPO representatives

(57) **Abstract**

An apparatus of a teleconference system comprises a controller, the teleconference system being configured to enable communication between a plurality of users. The controller detects similarity between speech audio signals with a user device and at least one teleconference equipment of one or more other users. The controller causes, in response to the similarity, a change in audibility of the speech audio signals between the user device and the at least one teleconference equipment.

## Description

### Field

The invention relates to a headset apparatus, a teleconference system, a user device and a teleconferencing method.

### Background

Noise cancelling headphones are popular, and almost all of them have a pass-through feature which allows the user to hear sound sources around him/her as if he/she was, at least almost, not wearing the headphones. Whether the user sets the noise cancellation or pass-through on depends on user needs, whether the user wants to hear e.g. people talking around him/her or whether he/she wants to attenuate noise sources around him/her. Setting the headphones to the pass-through or noise cancellation mode typically requires using the user interface of the mobile device which the headphones are connected to, or pushing buttons on the headphones themselves.

Teleconferencing services are getting more and more popular thanks to increasing remote working trend. Even when at the workplace, people more and more commonly participate teleconferences using their own cubicle/desk because teleconferencing audio quality is better with dedicated headsets than when using conference phones. It may also be so that because meeting rooms are not available or are less used during the pandemic, it is easier to continue working on other things at your desk while participating teleconference etc. All in all, there are more and more cases where multiple people have joined in the same teleconference in the same room while each person is wearing his own headset.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there are provided apparatuses of claims 1, 4 and 5.

According to an aspect of the present invention, there is provided a method claims 15.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Example embodiments of the present invention are described below, by way of example only, with reference to the accompanying drawings, in which
Fig. 1 illustrates an example of a teleconference system;
Fig. 2 illustrates on example of a server;
Fig. 3 illustrates an example of a headset;
Fig. 4 illustrates an example of a user equipment;
Fig. 5 illustrates an example of an implementation of the teleconference system;
Fig. 6 is a flow chart of the teleconferencing method; and
Fig. 7 illustrates of an example of a flow chart of a teleconferencing method.

### Description of embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The term "headset" refers to a combination of a loudspeaker and a microphone. The headset may mean a headphone or an earbud, for example. The headphone comprises at least one electroacoustic transducer for ear or ears. The electroacoustic transduces which can be called loudspeakers convert electric signals into audible sounds. The microphone, in turn, is an acoustoelectric transducer that converts acoustic signals into electric signals. Hence, a person with a headset can listen to audio signals of other persons that are out of earshot and transmit his/her sound and voice with a microphone to people too far away to hear the audio signal as such when the headset is directly or indirectly connected with a teleconference system.

The headset 100 in an embodiment includes a noise cancellation feature, the noise cancellation being performed by a specific noise cancellation electric circuitry which receives ambient audio and cancels at least part of them by feeding audio signals oppositely phased to the ambient audio signals to ear(s) of the user.

The headset has a possibility to turn on noise cancellation and it also has a possibility to turn off the noise cancellation and allow to hear through the device speaker(s) (the electroacoustic transducer(s) with a case of the headset). The hear-through can refer to a pass-through feature. The hear-through feature may or may not include amplification of the audio signal passed through, and the hear-through feature may be used to control the amount of ambient audio heard by the user.

A teleconference system may also be called video teleconference system if also images, still or video, in addition to audio signals are transmitted between people in different, often distant locations, between people in different cities, countries or continents, for example. A teleconference system may be used for organizational meetings, for example.

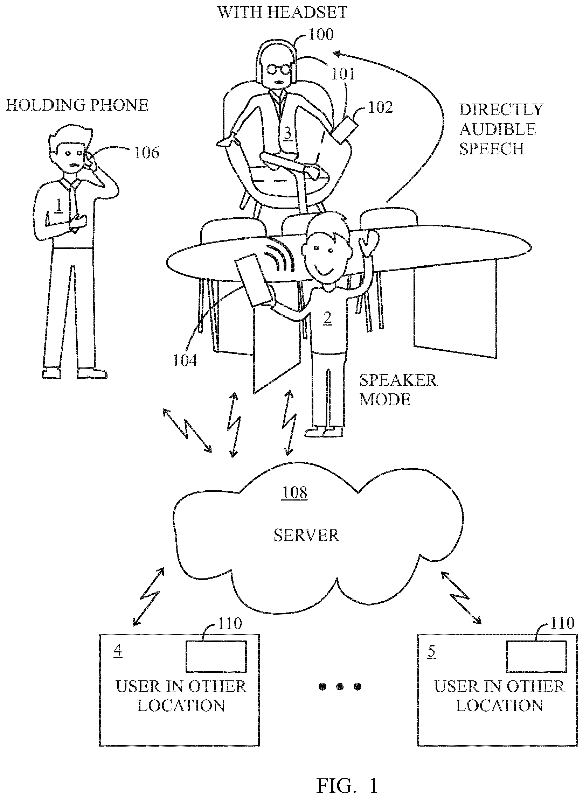

Fig. 1 illustrates an example of an online conferencing via a teleconference system, which allows electromagnetic communication between a plurality of users 1, 2, 3, 4 and 5.

The networks of the radio system through which the teleconference can take place may be anything, fixed, landline, wireless, 3G, 4G, 5G, local access network (LAN), wireless LAN (WLAN) etc. for the teleconference system. Typically, audio is encoded for transmission using e.g. adaptive multirate (AMR) codec, AMR wideband (AMR-WB) codec, moving picture experts group advance audio coding (MPEG AAC) codec, sub-band coding (SBC) codec etc.

In Fig. 1 it is illustrated that a user 3 has a user device 101 that comprises a user equipment 102 and a headset 100 while the others may use their teleconference equipment 104, 106, 110. However, the user 3 may as well participate the teleconference with only the user equipment 102 without the headset 100. In this document, the user device 101 refers to the user equipment 102 alone, the headset 100 alone or the user equipment 102 with the headset 100. The teleconference equipment 104, 106, 110, in turn, may be a headset or the like or it may be a user equipment with or without a headset. The term "teleconference equipment" has been used for other users in order to clarify how teleconferencing is performed according to the solution in this document.

When multiple users 1, 2 and 3 participate the same teleconference physically close to each other, in the same room, for example, they can hear each other's voice twice, the first time occurring directly when speech from the other people in the same room acoustically reaches their ears potentially through the headset because no noise cancellation is perfect (see directly audible speech in Fig. 1) and the second time occurs when they hear the same speech transmitted via a microphone of the teleconference equipment 104, 106 and a server 108 of the teleconference system to their user device 101. This kind of double talk is highly annoying to the user 3 and makes listening more laborious and understanding the speech more difficult. Additionally, communicating with people in the same room is further impaired because hearing them is more difficult when noise cancellation of the headset 100 attenuates their voice.

In order to improve teleconference audio experience the voice of one or more people close to each other (in the same room, for example) can be removed from the teleconference service directed to said one or more people close to each other (in the same room, for example) while still transmitting their voice to other people, who are not close to said one or more people. This works with any device (not just with the headset).

That people are close to each other means that they can hear each other's voices directly. That also means that the microphone of a user's user device 101 can convert voice of at least one other person's 2 voice into an electronic signal which is disturbingly audibly replayed by said user device 101.

That people are not close to each other means that they cannot hear each other's voices or hardly can hear each other's voices directly. In Fig. 1 such people are the users 4 and 5 for the users 1, 2 and 3, and vice versa. That is, the microphone of a user's user device 101 cannot convert voice of at least one other person's 4, 5 voice into an electronic signal and the disturbingly audibly replay by said user device 101 can naturally be avoided.

In addition to removal of disturbing audio signals, a hear-through feature of the headset 100 can be activated in order to facilitate hearing sound of other people in the same room or otherwise close. Further, the hear-through may be configured such that it mostly lets through only sounds that correlate with teleconference sounds and not with other sounds. For example, sounds from a direction, where another teleconference participant is, may be passed through the headset 100 whereas sounds from other directions are not.

Without these kinds of features, people in the same room or otherwise within earshot participating the same teleconference may suffer from "double talk" and reduced audio quality.

Examine now a little bit closer how these features can be achieved using Figs 1, 2, 3 and 4. The teleconference system comprises at least one controller 200, 300, 400, which detects similarity between speech audio signals i.e. voice of a speaking user 2 received both with the user device 101 of the user 3 and a teleconference equipment 104 of the user 2. The controller 200, 300, 400 may be that of the headset 100, the user equipment 102, or a server 108 or in all or a part of these. That is, the voice of the user 2 is received by two different equipment: user device 101 and teleconference equipment 104. The controller 200, 300, 400 then causes directly or indirectly a change in audibility of the at least one of speech audio signals between the user device 101 and the at least one teleconference equipment 104, 106 in response to the similarity. The controller 200, 300, 400 can directly start an action to limit audibility of the at least one of speech audio signals between the user device 101 and the at least one teleconference equipment 104 or it can send a control signal on the similarity, which then can cause the user equipment 102 and/or the headset 100 to change the audibility of the at least one of the speech audio signals between the user device 101 and the at least one teleconference equipment 104.

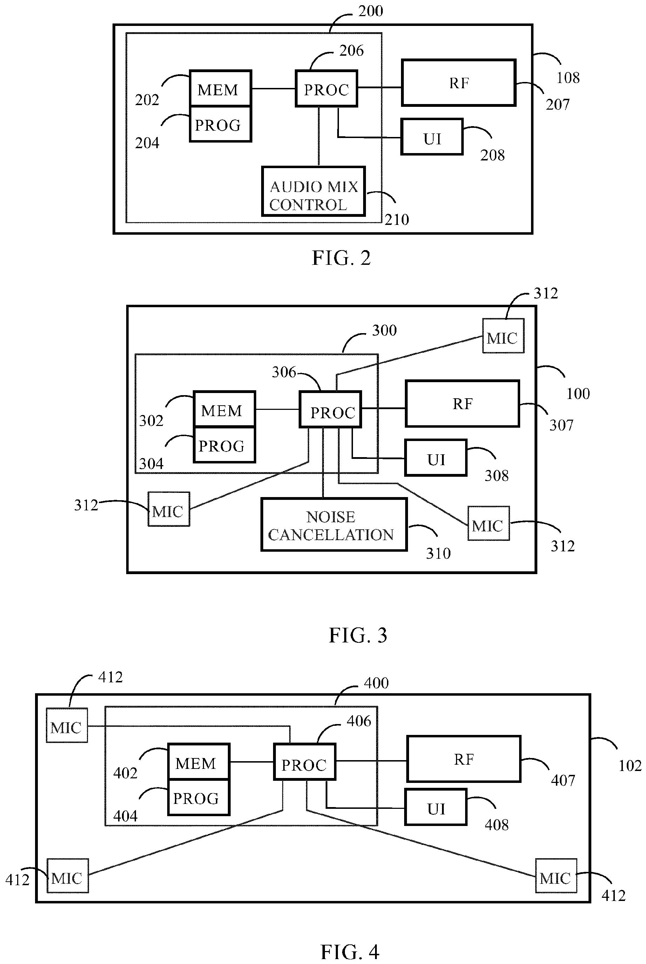

Fig. 2 illustrates an example of a server 108 of the teleconference system. The server 108 comprises the controller 200 which is a data processing and control circuitry that includes one or more processors 206 and processes audio data and controls operation of the teleconference system. The server 108 also comprises one or more memory 202 for storing data. Furthermore, the one or more memory may store software 204 executable by the controller 200. The one or more memory 202 may be integrated in the controller 200.

In an embodiment, a software 204 may comprise a computer program comprising computer program code means adapted to cause the controller 200 of the server 108 to realise, utilising the components of the server 108, at least some of the embodiments described in this document.

The server 108 may also comprise a user interface 208 for user inputs and outputs and an interface circuitry 207 (e.g. a transceiver or connector) for transmitting and receiving data.

The server 108 may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The computer program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

In an embodiment, the controller 200 of the server 108 is configured to determine the similarity between a first electromagnetic signal formed from an audio signal received by one or more microphones 312, 412 of the user device 101 and a second electromagnetic signal including an audio signal received through one or more teleconference equipment 104, 106 separate from user device 101.

In an embodiment, the server 108 may comprise the controller 200 of the server 108 forms the control signal that is based on the similarity and sends the control signal to the user device 101.

An audio mix controller 210 of the server 108 of the teleconference system controls distribution of audio signals to the users of the user device 101 and the teleconference equipment 104, 106, 110 when they are communicating with the teleconference system. The audio mix controller 210 may be considered a part of the controller 200 of the server 108. The audio mix controller 210 cancels distribution of at least one of speech audio signals, which are received by the user device 101 and transmitted to the server 108, back to the user device 101 in response to the detected similarity. The distribution of the at least one of the speech audio signals may be cancelled to all users whose voices have the similarity. The distribution of the at least one of the speech audio signals may be cancelled to all users whose voices cross the threshold of the similarity. The audio mix controller 210 distributes the speech audio signals of other users 1, 2, 4, 5 normally to all participants of the teleconference. The controller 200 may also send the control signal to user device 101 in response to the detected similarity. The control signal may include information on the similarity, a separate instruction and/or spatial information for one or more actions to be taken by user equipment 102 and/or the headset 100.

The server 108 may comprise one or more interface circuitries 207, and/or user interface 208. The interface circuitries are operationally connected to the controller 200. An interface circuitry 207 may be a set of transceivers configured to communicate with a RAN node, such as an (e/g) NodeB of a wireless communication network, or communicate utilising sidelink communication with an image and sound apparatus. The interface circuitry may be connected to an antenna arrangement (not shown). The user interface 208 may comprise one of more of the following: a keyboard, a mouse, a touchscreen, or the like.

It should be understood that the server 108 is depicted herein as an example illustrating some embodiments. It is apparent to a person skilled in the art that the server 108 may also comprise other functions and/or structures and not all described functions and structures are required. Although the server 108 has been depicted as one entity, different modules and memory may be implemented in one or more physical or logical entities.

In an embodiment an example of which is illustrated in Fig. 3, the headset 100 may include a data processing and controller 300 that may be configured to process audio data and control at least part of the operation of the headset 100.

In an embodiment, the headset apparatus 100 may comprise a memory 302 for storing data. Furthermore, the memory may store software 304 executable by the controller 300. The memory may be integrated in the control circuitry.

When the headset 100 is used, it can comprise a noise cancellation circuitry 310 as Fig. 3 shows. The headset 100 may receive the control signal. Alternatively, the headset 100 may comprise the controller 300, which forms the control signal in response to similarity between audio signals received with the headset 100 and at least one teleconference equipment 104, 106 of the one or more other users 1, 2 who are close to the user 3.

The headset 100 can perform at least one of the following in response to the control signal. The headset 100 can activate a hear-through mode. The hear-through mode causes the user 3 to hear ambient audio around the user 3 through the headset 100 with a reduced or no level of noise cancellation. In the hear-through mode, the audio signals passed through the headset 100 may also be amplified by the noise cancellation circuitry 310. The headset 100 may also turn-off the noise cancellation in response to the control signal. Instead of or in addition to the activation of the hear-through mode, the headset 100 may present information to switch off the noise cancellation to the user 3 of the headset 100 using a user interface 308 of the headset 100. The user 3 may utilize the information, and may turn off the noise cancellation, for example.

Instead of the mere hear-through control, other processing can be used to hear sounds around the user 3. For example, noise cancellation or speech enhancement, by recording sounds around the user 3 and playing them to the user bandpass filtered in real time, where the bandpass filter cut-off frequencies are around speech frequencies e.g. lower cut-off at 200Hz and upper at 4kHz, can be used.

The user equipment 102 may present information to switch off the noise cancellation to the user 3 of the user equipment 102 with the user interface 408 of the user equipment 102. The user 3 may utilize the information and may turn off the noise cancellation, for example.

The headset apparatus 100 with noise cancellation circuitry 310 can comprise radio frequency circuitry 307 for communicating electromagnetically with the teleconference system that enables communication between the user 3 of the headset 100 and one or more other users 1, 2, 4, 5 with teleconference equipment 104, 106, which are physically separate from the headset 100 and connected with the teleconference system. In this kind of embodiment, the headset 100 is the user device 101 and no user equipment 102 is required.

The headset 100 performs, in response to the control signal, at least one of the following: activation of a hear-through mode of the headset 100 caused by the noise cancellation circuitry 310, and informing the user 3 of the headset 100 to turn off the noise cancellation. The hear-through mode causes the user to hear ambient audio around the user 3 through the headset 100 with a reduced or no level of noise cancellation. The activation of the hear-through mode may include turning off the noise cancellation.

The user interface 308 may comprise one of more of the following: a keyboard, at least one light emitting diode (LED), a screen, a touchscreen or the like. The headset 100 may inform the user with the at least one LED, the screen, the touchscreen and/or the speakers of the noise cancellation.

In an embodiment, the headset apparatus 100 may amplify ambient audio around the user 3 in response to the control signal. The noise cancellation circuitry 310 may perform the amplification.

In an embodiment, the noise cancellation circuitry 310 may turn off noise cancellation of the headset 100 in response to the control signal.

In an embodiment, the controller 300 of the headset 100 may form the control signal, which is based on similarity between an object audio signal of at least one teleconference equipment 104, 106 of the one or more other users 1 or 2, and an ambient audio signal received through the headset 100. In an embodiment, the headset 100 may send the control signal and/or the information on the similarity to the server 108. In an embodiment, the audio mix controller 210 cancels distribution of at least one of the speech audio signals, which are received by the user device 101 and transmitted to the server 108, back to the user device 101 in response to the control signal and/or the similarity. In an embodiment, the audio mix controller 210 cancels distribution of the at least one of the speech audio signals, which are received by the user device 101 and transmitted to the server 104, back to the teleconference equipment 104 and/or the teleconference equipment 106 in response to the control signal and/or the similarity.

The headset 100 may control the direction of the pass-through signal or amplify sounds in some directions. The hear-through or pass-through may be set on only for directions from which the sound correlates well with the downlink audio. Other directions may still be attenuated.

In an embodiment an example of which is illustrated in Fig. 3, the headset apparatus 100 comprises a microphone, which is a spatial microphone 312. The spatial microphone may comprise two or more microphone units, for example, at separate locations.

The controller 200, 300 of the teleconference system may detect similarity dependent on a direction between the ambient audio signal received with the spatial microphone 312 of the headset apparatus 100 and the speech audio signal of the at least one teleconference equipment 104, 106 of one or more other users 1, 2.

As a result, the controller 200, 300, 400 of the headset apparatus 100, the user equipment 102 which the headset 100 may be coupled with or the server 108 of the teleconference system may form the control signal with spatial information on a direction related to the ambient audio signal received with the spatial microphone 312 of the headset 100. The headset 100 may activate the hear-through mode of the headset 100 in said direction only. In this embodiment, the user 3 may hear the user 2 directly acoustically through his headset 100 while the teleconference system delivers the user 3 voices of the users 1, 4, 5 using the headset 100 in a normal fashion.

This kind of directional cancellation may be achieved in the headset 100 with multiple microphones (typically at least 3 in each earcup) using e.g. beamforming. The headphones may create beamformed signals to different directions and the direction that has highest correlation with the downlink audio is chosen. As a simple and extreme example, the pass-through may be enabled for only the headphone cup that is on the side of another person in the same room and in the same teleconference and not on the other side cup.

A spatially directed sound or in this case spatially lowered or eliminated noise cancellation can be created using known methods for example by spatializing the noise cancellation signals based on beamforming techniques using metadata analysed from signals of the spatial microphone 312. The metadata can include direction and direct-to-ambient ratio such that both the direction and the intensity of the noise cancellation can be controlled.

A binaural audio representation can be formed by having a pair of microphones spaced from each other with a similar distance as a distance between ears of a person, for example. A binaural spatial audio representation may also be captured according to other known methods. The binaural spatial audio may be created using a pair of loudspeakers such that there is one loudspeaker per ear.

With at least four cardioid microphone units and/or an omnidirectional microphone units or the like it is possible to form either binaural or object-based form of a spatial audio signals although it is also possible to have a spatial audio information with three microphone units. Some spatial/directional information may be gathered also with only two separate microphone units. The at least four microphones are pointed in different directions thereby covering a half sphere or a full sphere of 4π solid angle, for example. The binaural form can be converted into object-based audio and vice versa. In a similar manner, a plurality of loudspeakers, which are controlled by suitable delays and amplification, can create/replay spatial audio signals by beamforming. Hence, any spatial audio representation, input or output, is possible. There are a plurality of known possibilities, *per se,* to capture, record and/or generate spatial audio, and hence such solutions do not need to be discussed in detail in this document.

In an embodiment, the controller 200, 300, 400 of the headset 100, the user equipment 102 or the server 108 of the teleconference system may perform correlation between an audio signal of the one or more other users 1, 2 received with the user device 101 and an audio signal received with the at least one teleconference equipment 104, 106 of the one or more other users 1, 2 in order to determine the similarity. If the correlation is larger than a fixed or adaptive threshold, the controller 200, 300, 400 may cancel distribution of the at least one of the speech audio signals received by the user device 101 to the user device 101. Additionally or alternatively, the controller 200, 300, 400 may form and send the control signal to the user device 101. The controller 200, 300, 400 may send the control signal also to the teleconference equipment 104 and/or 106 if the correlation crosses the fixed or adaptive threshold related to the teleconference equipment 104, 106, too.

The threshold may be set quite high since the double talk is most annoying only if the persons close to each other and can hear each other really well (in the same room, for example). If the persons in the same but large enough room are actually far from each other or if there is a lot of noise in the room, the correlation may not exceed the threshold that is set suitably high and the removal of audio signals and/or the activation of hear-through feature are/is not necessarily used. Also, it may be required that correlation stays high long enough or all the time, so that listening to a same song in different locations will not trigger the removal of audio signals and the activation of hear-through feature (although this is unlikely since it would require a match with the delays as well.).

If the same speech received acoustically is about 10dB or quieter than the same speech that the server 108 would transmit, then it is rather quiet, and this solution described in this document would not necessarily to be used (although it may be used). However, otherwise the solution may be used. The threshold is high in the sense that about 10dB quieter sounds are still audible and easily recognizable in other use cases. In the case, in which the headset 100 is used, the headset 100 blocks much of the sound (noise cancellation helps here) and partly, because people can separate between voices coming from the teleconference system and surrounding sounds without it becoming annoying just as long as there is some clear difference.

An example of a block diagram of the user equipment 102 without a headset 100 is illustrated in Figure 4. If the headset 100 is capable of communicating with the teleconference system alone without a connection with the user equipment 102, the headset 100 is or is like the user equipment 102. That is why, a block diagram of the user device 101 corresponds to what is drawn in Fig. 4. A block diagram of the teleconference equipment 104, 106, 110 may also be equivalent with or similar to the user equipment 102 in Fig. 4.

The user equipment 102 includes a controller 400 that is a data processing and control circuitry. The controller 400 processes audio data and controls the operation of the user equipment 102. The controller 400 may also be configured to process audio data and control at least part of the operation of the headset 100.

The user equipment 102 comprises a memory 402 for storing data. Furthermore, the memory may store software 404 executable by the controller 400. The memory may be integrated in the control circuitry. The controller 400 also comprises one or more processors 406.

In an embodiment, a software 404 may comprise a computer program comprising computer program code means adapted to cause the controller 400 of the user equipment 102 to realise, utilising the components of user equipment 102, at least some of the embodiments described in this document.

The user equipment 102 may also be called subscriber unit or a user terminal. The user equipment 102 includes wireless mobile communication devices, i.e. radio frequency circuitry (marked RF 407 in Figure 4) operating with or without a universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. The user equipment 102 may also be a device having capability to operate in Internet of Things (loT) network which is a scenario in which objects are provided with the ability to transfer data over a network without requiring human-to-human or human-to-computer interaction, e.g. to be used in smart power grids and connected vehicles. The user equipment 102 may also utilise cloud (see server 108 in Fig. 1). In some applications, the user equipment 102 may comprise a user portable device with radio frequency circuitry (see RF 407 in Fig. 4) and the computation is carried out in the cloud.

The user equipment 102 may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The computer program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

It should be understood that the user equipment 102 is depicted herein as an example illustrating some embodiments. It is apparent to a person skilled in the art that the user equipment 102 may also comprise other functions and/or structures and not all described functions and structures are required. Although the user equipment 102 has been depicted as one entity, different modules and memory may be implemented in one or more physical or logical entities.

The user equipment 102 may comprise one or more interface circuitries 407 and/or use interfaces 408. The interface circuitries are operationally connected to the control circuitry 400. An interface circuitry 106 may be a set of transceivers configured to communicate with a radio access network (RAN) node, such as an (e/g) NodeB of a wireless communication network, or communicate utilising sidelink communication with an image and sound apparatus. The interface circuitry may be connected to an antenna arrangement (not shown). The user equipment 102 may also comprise a connection to a transmitter instead of a transceiver. The user interface 408 may comprise one of more of the following: a keyboard, a mouse, a touchscreen, the headset apparatus 100 or the like.

The user interface 408 may be connected with at least one of the following: one or more speakers and a connector of the headset 100. The user equipment 102 may comprise a spatial microphone 412 for receiving the audio signals of the user 3, and it may also receive ambient audio signals.

The user equipment 102 of the user 3 can be connected with the teleconference system that enables electromagnetic communication between a plurality of users 1, 2, 3, 4 and 5.

In an embodiment, the controller 400 of the user equipment 102 may detect similarity between speech audio signals received with the user equipment 102 and at least one teleconference equipment 104, 106 of one or more other users 1, 2. The controller 400 of the user equipment 102 may form the control signal, which is based on similarity between an object audio signal of at least one teleconference equipment 104, 106 of the one or more other users 1, 2, 4 and 5 and an ambient audio signal received through the user equipment 102. The controller 400 of the user equipment 102 may then send the control signal and/or the information on the similarity to the server 108. The audio mix controller 410 cancels distribution of the at least one of the speech audio signals, which are received by the user device 101 and transmitted to the server 108, back to the user device 101 in response to the control signal and/or the similarity. In an embodiment, the audio mix controller 410 cancels distribution of the at least one of the speech audio signals, which are received by the user device 101 and transmitted to the server 108, back to the teleconference equipment 104 and/or the teleconference equipment 106 in response to the control signal and/or the similarity.

In an embodiment, the headset 100 may be connected in a wireless or wired manner with the user equipment 102, which communicates with the teleconference system. The user equipment 102 may send the control signal to the headset 100 regardless of which controller 200, 300, 400 has formed the control signal.

In an embodiment when the headset 100 is connected with the user equipment 102, the controller 400 of the user equipment 102 may form the control signal, which is based on similarity between an object audio signal of at least one teleconference equipment 104, 106 of the one or more other users 1, 2, 4 and 5 and an ambient audio signal received through the headset 100. The controller 400 of the user equipment 102 may then send the control signal to the headset 100 in response to the similarity. The controller 400 of the user equipment 102 may also send the control signal to the server 108 in response to the similarity.

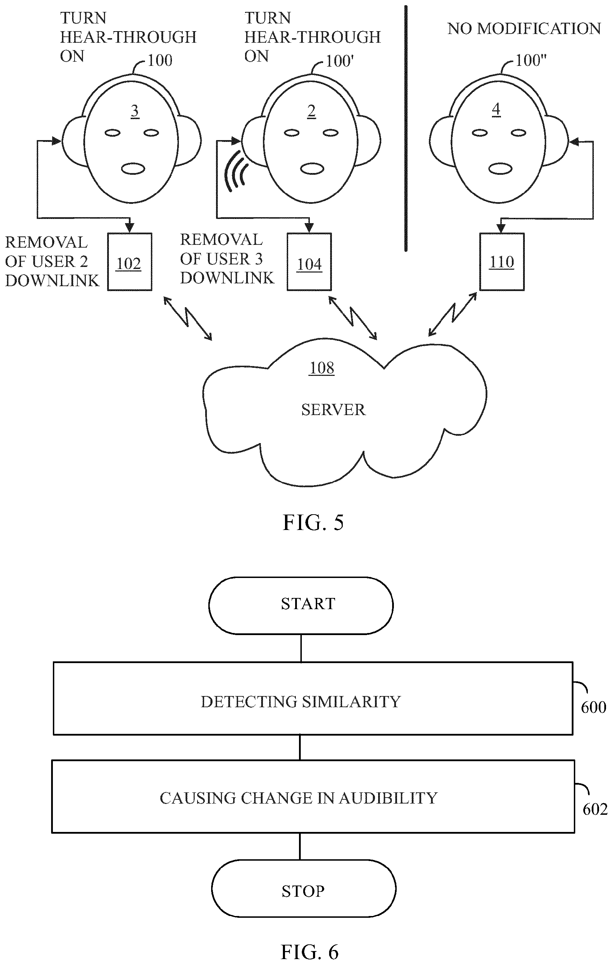

Fig. 5 illustrates an example of an implementation of the teleconference system. The users 2, 3, and 4 have headsets 100", 100' and 100 connected to the user equipment 102 and the teleconference equipment 104, 106, respectively. Headsets 100, 100', 100" have audio transducers (speakers and microphones), connection between headsets 100, 100', 100" and the user equipment 102 and teleconference equipment 104, 110, respectively, and the connection may be based on Bluetooth^{™}, for example. The user equipment 102 and teleconference equipment 104, 110 may be communicating with the server 108 using 3G, 4G, or 5G network, for example. The headsets 1000, 100', 100" may be active noise cancellation (ANC) capable. The headsets 100, 100', 100" may create object and ambient audio (using known methods from e.g. 3GPP IVAS (3rd Generation Partnership Project Immersive Voice and Audio Services)) and these audio forms are transmitted to the server 108. Server 108 may create a mix of the object audios from all participants and transmits the mix (possibly a spatial audio mix) back to the users 2, 3, 4. The operation of the headsets 100, 100', 100" may be controlled by the user equipment 102 and the teleconference equipment 104, 110, respectively. The server 108 may compares the object and ambient audio signals by calculating cross correlation with different delays. If a maximum cross correlation exceeds a threshold, the server 108 determines that the user 2, whose voice in the object audio triggered the threshold, is close to the user 1. The two users 2, 3 may be in the same room. However, as explained earlier this comparison may be performed wholly or partially elsewhere in the teleconference system. As long as the same triggering occurs, the teleconference software of the server 108 modifies its operation by removing the voice from users 2, 3 that trigger the threshold from its service to the users 2, 3 and tells the user equipment 102 and the teleconference equipment 104 in question to turn on hear-through mode in the headsets 100, 100'. The service of the server 108 continues without modification to the user 4, who behind a wall, for example, in another room or so far away that the users 2 and 3 cannot have directly audible discussion with the user 4.

As already explained, other kind devices than headsets can be used. The possible devices in use may be mobile phones, laptops, head mounted displays (HMDs), smartwatches, wearable devices, or the like, example. Headsets are only needed in the embodiment for the pass-through mode control. Playback can utilize at least one speaker in headsets, speakers, laptops, mobile phones, smart speakers, smart watches etc. The audio does not in every embodiment need to be in the object+ambient form, but it may be normal mono audio used currently in communication through a radio system, in which case the cross correlation may be calculated between uplink audio from different teleconference system users. The server 108 may run on a dedicated system or on one or more of the participants' devices. Actual processing may occur in one or more places such as the headset 100, the user/teleconference equipment 102, 104, 106, 110 and/or server 108.

The recognition that some teleconference users are close to each other (in the same room, for example) may occur in the headset(s) 100, 100', 100", user equipment 102, teleconference equipment 104, 106, server 108 etc. The recognition may be performed by comparing the uplink and downlink audio signals.

The downlink signal is the radio signal transmitted from the RAN node, such as an (e/g) NodeB of a wireless communication network to the user device 101. The uplink signal is the radio signal transmitted from the user equipment 102 to the RAN node, such as an (e/g) NodeB of a wireless communication network.

If the uplink and downlink signals contain the same sound (with a delay therebetween) then the users are close to each other (in the same room, for example). The comparison can be a cross correlation calculation with different delays and if the cross correlation exceeds a threshold, then the users are within an earshot from each other. This is different from prior art echo cancellation where, for example, a user equipment removes a signal generated by a loudspeaker of said user equipment, the signal being acoustically picked up by the microphone of said user equipment. The difference is that in the echo cancellation the microphone receives the loudspeaker signal delayed (delay caused by audio travelling acoustically) whereas according to what is explained in this document the microphone receives the acoustic audio signal first and it is the electric signal of the audio signal that is delayed by the teleconference system. Also, the delays dealt with the telecommunication system are typically significantly larger (hundreds of milliseconds) than the acoustic delays based on the speed of sound than those used in the echo cancellation arrangement, and the delays of these two are of opposite sign (which is first analogue/digital playback signal or microphone receiving the signal).

Instead of comparing the uplink and downlink audio signals, downlink audio signals may be compared because uplink audio signal created by the headset 100 or the user equipment 102 is typically significantly attenuated for other frequencies except the voice of the person wearing the headset 100 or using the user equipment 102. A good estimate may be comparing microphone signal of the headset 100 or the user equipment 102 to downlink audio because the microphone signal of the headset 100 or the user equipment 102 is an accurate estimate of what the user 3 can and cannot hear.

In some embodiments when the threshold is triggered, the teleconference software in the user device 101 may also remove sounds from sound sources that correlate well with the downlink audio. For example, the user device 101 of the user 3 recognizes that in its uplink there is voice from both users 3 and 2. The user device 101 of the user 3 may then remove voice of the user 2 from its uplink because the teleconference equipment 104 and/or the headset 100' of the user 2 captures voice of the user 2 better and sending voice of the user 2 from user device 101 as well would only cause an annoying repetition of voice in the teleconference system. This removal uses known methods of audio focusing, which can be considered a form of acoustic beamforming, and noise cancellation to modify microphone signals (typically two or more) so that the correlation can be reduced. While performing the audio focusing, relative loudness of sound sources can be changed. Acoustic beamforming and spectral filtering are traditional methods for doing audio focusing. It should be understood that a plenty of methods can be used for audio focusing. Acoustic focusing may include, without limiting to these, noise gating, muting, and attenuation for example.

When comparing the uplink and downlink audio may use information about the delay to help narrow down the amount of correlation calculations that needs to be done. In an embodiment, a server 108 may transmit information on the delay that the system has or information on when downlink audio was captured (time) in the teleconference system, and the cross correlation may only need to be calculated for delays around the assumed system delay so that the number of cross correlation calculations is reduced.

Figure 6 is a flow chart of the teleconferencing method. In step 600 similarity between speech audio signals with a user device and at least one teleconference equipment of one or more other users is detected, the teleconference system being configured to enable communication between a plurality of users. In step 602, a change in audibility of the at least one of the speech audio signals between the user device and the at least one teleconference equipment is caused in response to the similarity.

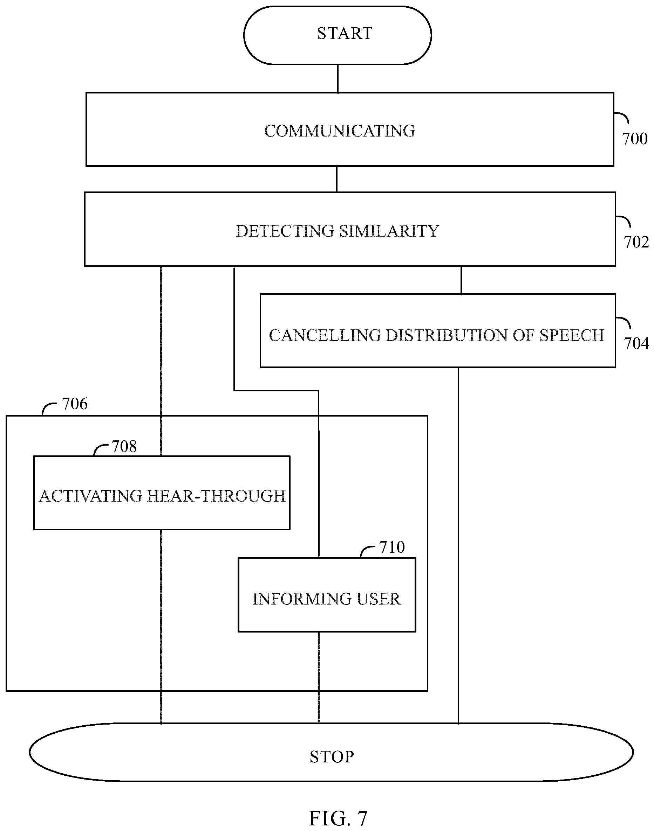

Figure 7 is a flow chart of the teleconferencing method. In step 700, communication is performed between a user device 101 and one or more teleconference equipment 104, 106 of the other users 1, 2, 4, 5 through a teleconference system. In step 702, similarity is detected between speech audio signals received with the user device 101 and the at least one teleconference equipment 104, 106 of the one or more other users 1, 2. In step 604, distribution of the at least one of the speech audio signals received by the user device 101 is cancelled to the user device 101. Step 706 is additional or alternative to step 604 and comprises at least one of the step 708 and 710. In step 708 a hear-through mode of a headset apparatus 100 connected with a user equipment 102 of the user device 101 is activated. In step 710 the user 3 of the headset apparatus 100 of the noise cancellation is informed to switch off the noise cancellation. The hear-through mode causes the user to hear ambient audio around the user 3 through the headset apparatus 100 with a reduced or no level of noise cancellation.

The steps and related functions described in this document and attached Figs are in no absolute chronological order, and some of the steps may be performed simultaneously or in an order differing from the given one. Other functions can also be executed between the steps or within the steps. Some of the steps can also be left out or replaced with a corresponding step.

An embodiment provides a computer program embodied on a distribution medium, comprising program instructions which, when loaded into an electronic apparatus, are configured to control the apparatus to execute at least the following: detect similarity between speech audio signals with the user device and the at least one teleconference equipment, and cause, in response to the similarity, a change in audibility of at least one of speech audio signals between the user device and the at least one teleconference equipment.

An embodiment provides a non-transitory computer readable medium comprising program instructions for causing an apparatus to perform at least the following: detect similarity between speech audio signals with the user device and the at least one teleconference equipment, and cause, in response to the similarity, a change in audibility of at least one of speech audio signals between the user device and the at least one teleconference equipment.

An embodiment provides a computer readable medium comprising program instructions for causing an apparatus to perform at least the following: detect similarity between speech audio signals with the user device and the at least one teleconference equipment, and cause, in response to the similarity, a change in audibility of at least one of speech audio signals between the user device and the at least one teleconference equipment.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as technology advances, the inventive concept can be implemented in various ways. The invention and its embodiments are not limited to the example embodiments described above but may vary within the scope of the claims.

## Claims

1. An apparatus of a teleconference system comprises a control means, the teleconference system configured to enable communication between a user device and at least one teleconference equipment;
the control means is configured to detect similarity between speech audio signals with the user device and the at least one teleconference equipment; and
the control means is configured to cause, in response to the similarity, a change in audibility of at least one of the speech audio signals between the user device and the at least one teleconference equipment.

2. The apparatus of claim 1, wherein the apparatus comprises an audio mix control means of the teleconference system, and the audio mix control means is configured to cancel distribution of the at least one of speech audio signals to the user device in response to the similarity.

3. The apparatus of claim 1, wherein the apparatus comprising a headset apparatus, which comprises a noise cancellation means; and
the headset apparatus is, in response to the similarity, configured to perform at least one of the following:
activation of a hear-through mode of the headset apparatus by the noise cancellation means, and
informing, using a control signal, the user of the headset apparatus to switch off the noise cancellation, the hear-through mode causing the user to hear ambient audio around the user through the headset apparatus with a reduced or no level of noise cancellation.

4. The apparatus of claim 1 or 3, wherein the control means is configured to detect the similarity between an object audio signal of the at least one teleconference equipment and an ambient audio signal received with the user device.

5. The apparatus of claim 3 or 4, wherein the headset apparatus comprises the control means, which is configured to detect the similarity or form the control signal of the similarity, where the similarity is detected between an object audio signal of the at least one teleconference equipment and an ambient audio signal received with the headset apparatus.

6. The apparatus of claim 3, wherein the headset apparatus comprises a spatial microphone;
the control means is configured to detect similarity dependent on a direction between an ambient audio signal received with the spatial microphone of the headset apparatus and the speech audio signal of the at least one teleconference equipment; and
the headset apparatus is configured to activate the hear-through mode of the headset apparatus in said direction.

7. The apparatus of claim 1, wherein the user device comprises the apparatus, the user device being configured to receive a control signal of and/or the user device comprises control means for detecting the similarity between audio signals received with the user device and at least one teleconference equipment of one or more other users; and
the user device is configured to cause, in response to the similarity, the change in audibility of the at least one of speech audio signals between the user device and the at least one teleconference equipment.

8. The apparatus of claim 7, wherein the user device comprises a user equipment equipped with a headset apparatus, which comprises a noise cancellation means; and
the headset apparatus is configured to perform at least one of the following in response to the similarity:
activation of a hear-through mode of the headset apparatus performed by the noise cancellation means, and
presentation of information to the user of the headset apparatus to switch off the noise cancellation by a user interface, the hear-through mode causing the user to hear ambient audio around the user through the headset apparatus with a reduced or no level of noise cancellation.

9. The apparatus of claim 7, wherein the user device comprises the control means, which is configured to detect the similarity or form a control signal, where the similarity is detected between an object audio signal of at least one teleconference equipment of the one or more other users and an ambient audio signal received with the headset apparatus.

10. The apparatus of claim 7, wherein the control means of the user device is configured to cancel transmission of electric signals of the audio signals of the one or more other users received by the user device to the teleconference system in response to the similarity.

11. The apparatus of claim 1, wherein a server of the teleconference system comprises the control means, which is configured to determine the similarity between a first electric signal formed from an audio signal received by one or more microphones of the user device and a second electric signal including an audio signal received through one or more teleconference equipment separate from the user device.

12. The apparatus of claim 1, wherein the control means is configured to perform correlation between an audio signal of one or more other users received with the user device and an audio signal received with the at least one teleconference equipment in order to determine the similarity; and if the correlation is larger than a fixed or adaptive threshold, the control means is configured to cause cancellation of distribution of the at least one of speech audio signals received by the user device to the user device.

13. A teleconference system, wherein the teleconference system is configured to enable communication between a user device and at least one teleconference equipment and comprises a control means configured to detect similarity between speech audio signals with the user device and at least one teleconference equipment;
an audio mix control means of the teleconference system is configured to cancel distribution of the at least one of speech audio signals received by the user device to the user device and in response to the similarity; and/or
a headset apparatus of the user device is configured to perform at least one of the following in response to the similarity:
activate a hear-through mode of the headset apparatus performed by a noise cancellation means, and
presentation of information to the user of the headset apparatus to switch off the noise cancellation by a user interface, the hear-through mode causing the user to hear ambient audio around the user through the headset apparatus with a reduced or no level of noise cancellation.

14. A teleconferencing method, the method comprising
detecting similarity between speech audio signals with a user device and at least one teleconference equipment of one or more other users, the teleconference system being configured to enable communication between a plurality of users; and
causing, in response to the similarity, a change in audibility of the at least one of speech audio signals between the user device and the at least one teleconference equipment.

15. The teleconferencing method of claim 14, the method comprising detecting similarity between speech audio signals received with the user device and the at least one teleconference equipment of the one or more other users;
cancelling distribution of the at least one of speech audio signals received by the user device to the user device; and/or
the performing at least one of the following in response to the similarity:
activating a hear-through mode of a headset apparatus connected with a user equipment of the use device, the hear-through mode causing the user to hear ambient audio around the user through the headset apparatus with a reduced or no level of noise cancellation; and
informing the user of the headset apparatus to switch off the noise cancellation.
